**Europäisches Patentamt**

**European Patent Office**

**Office européen des brevets**

(19)

(11) Veröffentlichungsnummer: **0 062 141 B1**

(12) **EUROPÄISCHE PATENTSCHRIFT**

(45) Veröffentlichungstag der Patentschrift:
10.04.85

(51) Int. Cl.⁴: **G 06 F 13/00**

(21) Anmeldenummer: **82100794.5**

(22) Anmeldetag: **04.02.82**

(54) Schaltungsanordnung zur Eingabe von Steuerbefehlen in ein Mikrocomputersystem.

(30) Priorität: **26.03.81 CH 2037/81**

(43) Veröffentlichungstag der Anmeldung:
**13.10.82 Patentblatt 82/41**

(45) Bekanntmachung des Hinweises auf die Patenterteilung:
**10.04.85 Patentblatt 85/15**

(84) Benannte Vertragsstaaten:
**AT DE FR GB IT**

(56) Entgegenhaltungen:
DE - A - 2 420 119
US - A - 4 219 881

ELECTRONICS INTERNATIONAL, Band 5, Nr. 11, 26. Mai 1977, Seiten 112-113, New York, USA, E. HARRIMAN: " Intelligent multiplexer increases processor efficiency"
ELECTRONICS INTERNATIONAL, Band 50, Nr. 6, 17. Marz 1977, Seiten 100-104, New York, USA, J. WASHBURN: "Making mini I/0 upward-compatible"
ELECTRONIC DESIGN, Band 23, Nr. 26, 20. Dezember 1975, Seite 70, Rochelle, USA, R.N. SAHNI: "Keyboard circuit saves time, needs no microprocessor scanning software"
CONTROL ENGINEERING, Band 24, Nr. 2, Februar 1977, Seiten 41-42, New York, USA, H.A. RAPHAEL: "Keyboard/Microprocessor Interface: Software or hardware"

(73) Patentinhaber: **INVENTIO AG, Seestrasse 55, CH-6052 Hergiswil NW (CH)**

(72) Erfinder: **Friedli, Paul, Dr., Bucheggstrasse 172, CH-8057 Zürich (CH)**
Erfinder: **Meyer, Fritz, Sagenweid 6, CH-6403 Küssnacht a.R-. (CH)**

## Beschreibung

Die Erfindung betrifft eine Schaltungsanordnung zur Eingabe von Steuerbefehlen in ein Mikrocomputersystem, wobei ein Mikroprozessor über einen Adressen-, Daten- und Steuerbus mit mindestens einem Schreib-Lesespeicher und einem Festwertspeicher sowie über den Adressenbus, einen Ein-Ausgabebus und weiteren Leitungen mit einem parallelen Ein-Ausgabe-Interfacebaustein verbunden ist, gemäss Oberbegriff des Patentanspruches 1.

Für den Datentransfer zwischen einem Mikrocomputersystem und der Peripherie sind verschiedene Verfahren entwickelt worden. So wird beispielsweise bei der programmierten Ein-Ausgabe der Datentransfer durch ein vom Mikroprozessor des Systems auszuführendes Programm gesteuert. Als nachteilig erweist sich hierbei, dass mit zunehmender Anzahl Peripheriebausteine auch der Softwareaufwand wächst, und dass der Prozessor die Peripherie je nach Anwendung mehr oder weniger auf das Vorhandensein von Daten oder Steuerbefehlen absuchen muss, wodurch Zeit für andere Aufgaben verloren geht.

Bei einem anderen bekannten Verfahren, der Unterbrechungseingabe (Interrupt), werden diese Nachteile teilweise vermieden. Hierbei ist es üblich, bei Vorliegen von aufzunehmenden Daten oder Steuerbefehlen dem Mikroprozessor des Systems eine Unterbrechungsanforderung zuzuführen, worauf der Prozessor nach deren Akzeptierung das laufende Programm unterbricht, die Registerinhalte zwischenspeichert und mittels eines Interruptprogramms die neuen, von der Peripherie gesendeten Daten aufnimmt und verarbeitet und nach Beendigung des Interruptprogramms das Hauptprogramm fortsetzt. Sind mehrere Peripheriebausteine vorhanden und werden gleichzeitig mehrere Unterbrechungen angefordert, so wird mittels einer Prioritätslogik die Reihenfolge der Dateneingabe und -verarbeitung entschieden.

In bekannten Mikrocomputersystemen werden dabei Unterbrechungsprioritäts-Bausteine verwendet, welche gleichzeitig für die parallele Daten-Ein-Ausgabe geeignet sind. Ein derartiger im Handel erhältlicher Baustein, beispielsweise der TMS9901 von Texas Instruments (Anwender-Handbuch TM990/100M, Dezember 1977), besitzt an seiner Schnittstelle zur Peripherie sechzehn Interrupteingänge und weitere Ein-Ausgänge für parallel anstehende Daten. An der Schnittstelle zum Mikroprozessor weist der Baustein einen Interruptausgang und vier dazugehörige Adressenausgänge sowie weitere, für den Verkehr mit dem Prozessor erforderliche Ein- und Ausgänge auf. Bei auftretenden Unterbrechungsanforderungen definiert eine interne Prioritätslogik die Priorität der Interruptsignale und bildet die zur höchsten Priorität gehörige Adresse sowie den Interrupt für den Mikroprozessor.

Ein mit dem Verfahren der Unterbrechungseingabe verbundener Nachteil liegt darin, dass der Mikroprozessor gezwungen wird, eine laufende Operation zu unterbrechen und aufzuschieben.

Hierbei kann, bei Anwendung vorstehend beschriebener Bausteine, ein laufendes Interruptprogramm von einem oder mehreren neu auftretenden Interrupts höherer Priorität unterbrochen werden. Die darauf resultierende Interruptprogramm-Verschachtelung erfordert zusätzliche Prozessorzeit. Ein weiterer Nachteil liegt in der relativ beschränkten Anzahl der Interrupteingänge, so dass bei einer Vielzahl von einzugebenden Steuerbefehlen Interrupterweiterung durch Kaskadierung zweier Bausteine vorgenommen werden muss. Das erfordert jedoch zusätzlichen Softwareaufwand und entsprechend mehr Prozessorzeit.

Bei einer mit der Patentschrift US-A-4 219 881 bekanntgewordenen Eingabeeinrichtung für einen 16-Bit-Eingabekanal werden die Informationen Eingabeschaltkreisen zugeführt, welche ausgangsseitig mit den Dateneingängen von D-Flip-Flops und jeweils einem Eingang von den Eingabeschaltkreisen und den D-Flip-Flops zugeordneten Exklusiv-ODER-Gliedern verbunden sind. Die Ausgänge der D-Flip-Flops sind an den zweiten Eingängen der Exklusiv-ODER-Glieder angeschlossen, deren Ausgänge miteinander verbunden sind. Die Ausgänge der D-Flip-Flops sind ausserdem mit jeweils einem Eingang von zugeordneten NAND-Gliedern verbunden, deren zweite Eingänge miteinander in Verbindung stehen und deren Ausgänge an den Datenleitungen eines Eingabebusses angeschlossen sind. Die Eingabeeinrichtung arbeitet in der Weise, dass die in den D-Flip-Flops gespeicherten Daten mittels der Exklusiv-ODER-Glieder mit an den Ausgängen der Eingabeschaltkreise bzw. den Eingängen der D-Flip-Flops vorhandenen Daten verglichen werden. Weichen diese Daten bei mindestens einem Bit voneinander ab, so ändert sich der Signalzustand des die Ausgänge der Exklusiv-ODER-Glieder verbindenden Leiters, so dass bei Eintreffen eines vom Mikroprozessor ausgegebenen Abfragesignals eine Unterbrechungsanforderung erzeugt wird. Nach deren Akzeptierung adressiert der Mikroprozessor den Eingabekanal, wobei die D-Flip-Flops getaktet und deren Eingangszustände gespeichert werden. Mit der Adressierung wird der die zweiten Eingänge der NAND-Glieder verbindende Leiter aktiviert, so dass bei Auftreten eines vom Mikroprozessor ausgehenden Lesesignals, das neue 16-Bit-Datenwort über den Eingabebus in einen Schreib-Lesespeicher übertragen werden kann.

Wird eine derartige Eingabeeinrichtung bei Systemen mit mehreren 1- oder Mehrbit-Eingabekanälen angewendet, so muss jeder Kanal eine Unterbrechungsanforderungs-Leitung zum Mikroprozessor besitzen, wobei nach der Identifizierung der betreffende Kanal zwecks Dateneingabe vom Mikroprozessor adressiert werden muss. Neben den auf Spalte 2, Zeilen 1-11 erwähnten Nachteilen erfordert dieser Vorgang zusätzliche Software und je nach Anzahl Eingabekanäle auch mehr Computerzeit. Ausserdem wird pro Bit ein Exklusiv-ODER-Glied benötigt, was je nach Länge der Datenwörter und Anzahl der Eingabekanäle zu erheblichem Schaltungsaufwand führt.

In der Druckschrift «Electronics», May 26, 1977, Seiten 112-113, wird eine Dateneingabeeinrichtung beschrieben, bei welcher ein sechzehn Eingänge aufweisender Multiplexer ausgangsseitig mit dem seriellen Eingang eines 16-Bit-Schieberegisters verbunden ist. Der serielle Eingang sowie der Ausgang des 16-Bit-Schieberegisters sind an einem Komparator angeschlossen, dessen Ausgang mit einem Unterbrechungsanforderungs-Eingang eines Interfacebausteines verbunden ist. Wenn die an den Eingängen des Multiplexers anstehenden Daten eingegeben werden sollen, so überträgt der Mikroprozessor in sechzehn Leseoperationen die Daten in das Schieberegister. Danach werden die am seriellen Eingang und am Ausgang des Schieberegisters anstehenden Daten miteinander verglichen, wobei bei Gleichheit die Daten im Schieberegister jeweils um eine Stelle weitergeschoben werden. Bei Ungleichheit wird eine Unterbrechungsanforderung erzeugt und ein die Eingänge des Multiplexers adressierender Zähler gestoppt. Nach dem Lesen und Speichern der am seriellen Eingang des Schieberegisters anstehenden neuen Information wird der Zähler vorerst auf die nächste Adresse geschaltet und geprüft ob eine weitere Unterbrechungsanforderung vorliegt.

Bei dieser Dateneingabeeinrichtung muss der Mikroprozessor zu Beginn jeder Abtastoperation das Schieberegister laden und die anfänglichen Eingangsdaten in einen Schreib-Lesespeicher einschreiben. Das erfordert zusätzliche Software, wobei die für die Abwicklung des entsprechenden Programms erforderliche Zeit je nach Anzahl Eingänge beträchtlich sein kann. Ausserdem muss im Rahmen des Interruptprogramms das Datenbit und die dazugehörige mittels des externen Zählers erzeugte Adresse über Dateneingänge des Interfacebausteines in einer weitere Software und Zeit erfordernden Operation eingelesen werden.

Aus der Druckschrift «Electronics», March 17, 1977, Seiten 100-104, ist bekannt, dass der Datentransfer zwischen der Peripherie und einem Speicher ohne den Mikroprozessor mittels eines DMA-Bausteines durchgeführt werden kann. Eine DMA-Operation wird durch ein von der Peripherie ausgehendes DMA-Anforderungssignal gestartet. Hierauf zwingt der DMA-Baustein den Mikroprozessor durch Unterdrückung des Taktsignals seine Aktivität für einen Taktzyklus einzustellen (cycle stealing), so dass der DMA-Baustein die Steuerung des Busses übernehmen kann.

Die der Erfindung zugrundeliegende Aufgabe besteht darin, zwecks Behebung vorstehender Nachteile eine Schaltungsanordnung zu schaffen, die bei einer Vielzahl einzugebender Steuerbefehle mit einer minimalen Anzahl Eingabekanäle und geringem Hardwareaufwand auskommt, und bei der für die Dateneingabe weniger Software erforderlich ist, so dass die vom Mikroprozessor beim Eingabevorgang aufzuwendende Zeit verringert werden kann. Diese Aufgabe wird durch die in den Ansprüchen gekennzeichnete Erfindung gelöst. Hierbei wird wie an sich bekannt durch ein Freigabesignal des Mikroprozessors eine Vergleichseinrichtung aktiviert, welche die alten und neuen Schaltzustände von Steuerbefehlsgebern vergleicht und bei Ungleichheit eine Unterbrechungsanforderung erzeugt. Die Vergleichseinrichtung ist mit einem DMA-Baustein verbunden, welcher die Steuerbefehlsgeber und einen die alten Schaltzustände enthaltenden Schreib-Lesespeicher über den Adressenbus mittels zugeordneter Adressen abtastet. Bei Auffinden einer Ungleichheit und Erzeugung der Unterbrechungsanforderung wird die DMA-Operation abgebrochen, wobei sich das betreffende Datenbit und die zugeordnete Adresse bereits auf dem Dateneingabeleiter bzw. dem Adressenbus befindet.

Die mit der Erfindung erzielten Vorteile sind im wesentlichen darin zu sehen, dass die für die Vielzahl einzugebender Steuerbefehle geeignete Vergleichseinrichtung relativ einfach aufgebaut ist, und dass sich bei Auftreten der Unterbrechungsanforderung das Datenbit und die zugeordnete Adresse bereits auf dem Dateneingabeleiter bzw. dem Adressenbus befinden, wodurch beim Einlesen der Daten Software und Zeit gespart wird. Weiterhin ist es von Vorteil, dass die Peripherieeinheit direkt mit dem Dateneingabeleiter verbunden ist, so dass kein Dateneingang des parallelen Interfacebausteines benötigt wird, und dessen übrige Eingänge an der Schnittstelle zur Peripherie für andere Aufgaben zur Verfügung stehen. Da die in der Peripherieeinheit zusammengefassten Steuerbefehlsgeber nacheinander abgetastet werden, kann ein einmal laufendes Interruptprogramm durch einen neu eintreffenden Steuerbefehl nicht unterbrochen werden, so dass Prozessorzeit gespart werden kann. Ein weiterer Vorteil liegt in der Zusammenfassung der Steuerbefehlsgeber zu einem matrixförmigen Tastenfeld, wodurch, wie an sich bekannt, Ersparnis an Verdrahtung und Ansteuerelementen erzielbar ist.

Auf beiliegender Zeichnung ist ein Ausführungsbeispiel der Erfindung dargestellt, das im folgenden näher erläutert wird. Es zeigen:

Fig. 1 ein Blockschaltbild der erfindungsgemässen Schaltungsanordnung und

Fig. 2 eine Vergleichseinrichtung der Schaltungsanordnung gemäss Fig. 1.

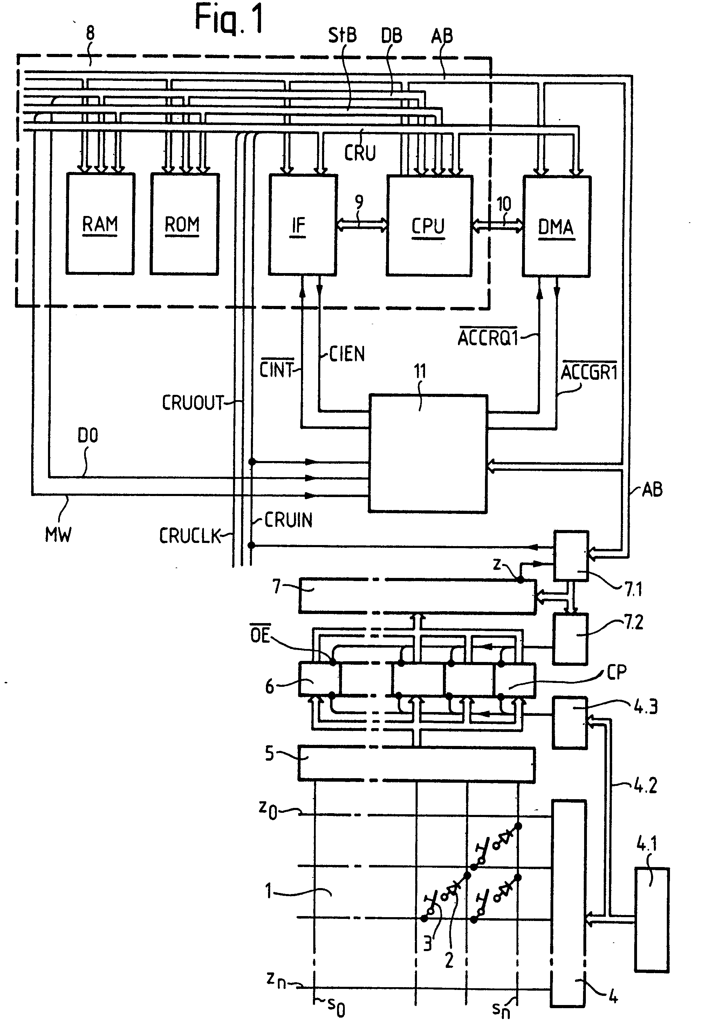

In der Fig. 1 ist mit 1 ein matrixförmiges Tastenfeld bezeichnet, dessen Zeilen- und Spaltenleiter an den Kreuzungspunkten mittes eines mit einer Diode 2 in Reihe geschalteten Steuerbefehlsgeber 3 verbindbar sind. Die Zeilenleiter $Z_0$-$Z_n$ sind an den Ausgängen einer aus einem Demultiplexer, Optokopplern und Verstärkern bestehenden Zeilenansteuerung 4 angeschlossen. Eine die Zeilenleiter adressierende, aus einem Zähler und einem Taktgenerator bestehende Adressiereinrichtung 4.1 ist über Adressenleiter 4.2 mit der Zeilenansteuerung 4 und einem adressierbaren Latch 4.3 verbunden. Die Spaltenleiter $S_0$-$S_n$ sind an den Eingängen eines Spaltenempfängers 5 angeschlossen, welcher aus Optokopplern, Impulsformen und einem Treiber besteht. Die den jeweiligen Spaltenleitern zugeordneten Ausgänge des Spaltenempfängers 5 sind an den Eingängen von Mehrfachspeichern 6 angeschlossen, wobei jedem Zeilenleiter ein Mehrfachspeicher 6 zugeordnet ist und die Anzahl der Speicherzellen eines Mehrfachspeichers 6 gleich der Anzahl der Spaltenleiter ist. So sind beispielsweise bei einer Matrix mit acht Zeilen- und acht Spaltenleitern insgesamt vierundsechzig einzelne Speicherzellen vorhanden, die in acht Mehrfachspeicher 6 in Form von Oktal-Flip-Flops aufgeteilt sind. Die Taktanschlüsse CP der Mehrfachspeicher 6 stehen mit den Ausgängen des adressierbaren Latch 4.3 in Verbindung. Bei der Adressierung beispielsweise des Zeilenleiters $Z_0$ werden gleichzeitig

über das adressierbare Latch 4.3 die Taktanschlüsse CP des dem Zeilenleiter $Z_0$ zugeordneten Oktal-Flip-Flops 6 aktiviert, so dass die Schaltzustände der mit dem Zeilenleiter $Z_0$ und den Spaltenleitern $S_0$-$S_n$ verbundenen Steuerbefehlsgeber 3 über den Spaltenempfänger 5 und die Eingänge des entsprechenden Oktal-Flip-Flops 6 an dessen Ausgänge übertragen werden.

Mit 7 ist ein Multiplexer bezeichnet, dessen Dateneingänge mit den Ausgängen der Mehrfachspeicher 6 verbunden sind. Ein Bustreiber 7.1 ist eingangsseitig an einem Adressenbus AB eines Mikrocomputersystems 8 angeschlossen und ausgangsseitig über einen ersten Teil der Adressenleiter mit den Adresseneingängen eines Demultiplexers 7.2 und über einen zweiten Teil der Adressenleiter mit den Adresseneingängen des Multiplexers 7 verbunden. Die Ausgänge des Demultiplexers 7.2 stehen mit den Freigabeanschlüssen $\overline{OE}$ der Ausgänge der Mehrfachspeicher 6 in Verbindung. Der Ausgang Z des Multiplexers 7 ist über den Bustreiber 7.1 an einem Dateneingabeleiter CRUIN angeschlossen, welcher, ebenso wie ein Datenausgabeleiter CRUOUT und ein Taktsignalleiter CRUCLK, einem seriellen Ein-Ausgabebus CRU des Mikrocomputersystems 8 zugeordnet ist.

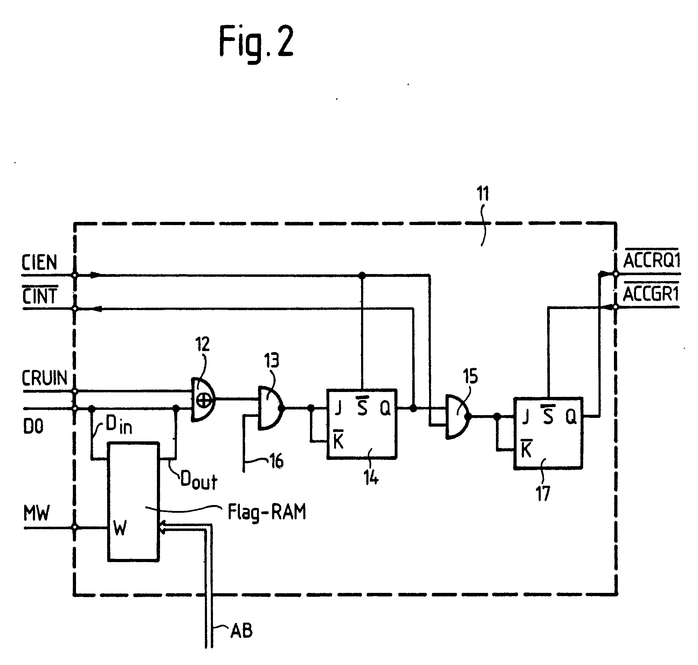

Ein Mikroprozessor CPU des Mikrocomputersystems 8 ist über den Adressenbus AB, einen Datenbus DB und einen Steuerbus StB mit mindestens einem Schreib-Lesespeicher RAM und einem Festwertspeicher ROM sowie über den Adressenbus AB, den Ein-Ausgabebus CRU und weiteren Leitungen 9, 10 mit einem parallelen Ein-Ausgabe-Interfacebaustein IF und einem DMA-Baustein DMA verbunden. Jeweils ein Bit einer Anzahl von im Schreib-Lesespeicher RAM gespeicherten Datenworten ist dem Schaltzustand eines bestimmten Steuerbefehlsgebers 3 zugeordnet. Der parallele Ein-Ausgabe-Interfacebaustein IF ist über einen Unterbrechungsanordnungs-Eingang $\overline{CINT}$ und einen ein Freigabesignal für eine DMA-Operation ausgebenden Ausgang CIEN an einer in der nachfolgenden Beschreibung der Fig. 2 näher erläuterten Vergleichseinrichtung 11 angeschlossen. Der DMA-Baustein DMA ist über einen ein DMA-Anforderungssignal lesenden Eingang $\overline{ACCRQ1}$ und einen ein Quittierungssignal ausgebenden Ausgang $\overline{ACCGR1}$ mit der Vergleichseinrichtung 11 verbunden.

In der Fig. 2 ist mit 12 ein Exklusiv-ODER-Glied bezeichnet, dessen einer Eingang mit dem Dateneingabeleiter CRUIN und dessen anderer Eingang mit dem Datenausgang $D_{out}$ eines weiteren Schreib-Lesespeichers Flag-RAM verbunden ist. Der Schreib-Lesespeicher Flag-RAM steht mit dem Adressenbus AB in Verbindung und ist über einen Dateneingang $D_{in}$ an einem Datenleiter D0 des Datenbusses DB über einen Schreibanschluss W an einem Leiter MW des Steuerbusses StB angeschlossen. Im weiteren Schreib-Lesespeicher Flag-RAM sind die Schaltzustände der Steuerbefehlsgeber 3 in Form von 1bit-Worten gespeichert. Der Ausgang des Exklusiv-ODER-Gliedes 12 ist über ein erstes NAND-Glied 13 mit den Eingängen J, $\overline{K}$ eines ersten $J\overline{K}$-Flip-Flops 14 verbunden, dessen Ausgang Q am Unterbrechungsanforderungs-Eingang $\overline{CINT}$ des parallelen Interfacebausteines IF und einem Eingang eines zweiten NAND-Gliedes 15 angeschlossen ist. Einem weiteren Eingang des ersten NAND-Gliedes 13 kann vom DMA-Baustein, wenn dieser für andere Zwecke eingesetzt ist, über den Leiter 16 ein Sperrsignal zugeführt werden. Der Set-Anschluss S des ersten $J\overline{K}$-Flip-Flops 14 steht mit einem weiteren Eingang des zweiten NAND-Gliedes 15 und dem Freigabesignal ausgebenden Ausgang CIEN des parallelen Interfacebausteines IF in Verbindung. Der Ausgang des zweiten NAND-Gliedes 15 ist mit den Eingängen $J\overline{K}$ eines zweiten $J\overline{K}$-Flip-Flops 17 verbunden, dessen Ausgang Q mit dem das DMA-Anforderungssignal lesenden Eingang $\overline{ACCRQ1}$ des DMA-Bausteines und dessen Set-Anschluss mit dem ein Quittierungssignal ausgebenden Ausgang $\overline{ACCGR1}$ des DMA-Bausteines verbunden ist.

Die für die Zuführung des Taktsignals zu den $J\overline{K}$-Flip-Flops erforderlichen Anschlüsse und Verbindungen sind nicht dargestellt. Die beschriebenen digitalen Verknüpfungsglieder und Bausteine sind im Handel erhältliche Komponenten, wobei beispielsweise für den Mikroprozessor, den parallelen Interfacebaustein und den DMA-Baustein solche vom Typ TMS9900, TMS9901 und TMS9911 von Texas Instruments verwendet werden können. Die an den verschiedenen Ein- und Ausgängen der Bausteine auftretenden Signale tragen die gleichen Bezeichnungen wie die betreffenden Ein- und Ausgänge.

Die vorstehend beschriebene Schaltungsanordnung, die beispielsweise für die Eingabe von Stockwerkrufen bei mikrocomputergesteuerten Aufzügen angewendet werden kann, arbeitet wie folgt:

Mit der Erzeugung eines Freigabesignals meldet das Mikroprozessorsystem 8 seine Bereitschaft für die Aufnahme von Peripherie-Steuerbefehlen. Hierbei wird das Potential am Ausgang CIEN des parallelen Interfacebausteines IF hochgesetzt. Der Unterbrechungsanforderungs-Eingang $\overline{CINT}$ des gleichen Bausteines möge nun beispielsweise bei nicht vorhandener Unterbrechungsanforderung hohes Potential aufweisen. In diesem Fall findet am Ausgang des zweiten NAND-Gliedes 15 und beim Taktsignalwechsel auch am Ausgang Q des zweiten $J\overline{K}$-Flip-Flops 17 der Vergleichseinrichtung 11 ein Potentialwechsel statt, der am Eingang $\overline{ACCRQ1}$ des DMA-Bausteines als DMA-Anforderungssignal interpretiert wird. Der DMA-Baustein gibt darauf über seinen Ausgang $\overline{ACCGR1}$ ein Quittierungssignal an den Set-Anschluss des zweiten $J\overline{K}$-Flip-Flops 17 und signalisiert dem Mikroprozessor CPU, dass er die Kontrolle über den Adressen- und Datenbus AB, DB wünscht. Dies wird nach einer gewissen Latenzzeit gewährt, worauf der DMA-Baustein eine Adresse seines Adressenregisters auf den Adressenbus AB setzt. Damit fühlen sich die Peripherieeinheit 1 bis 7 und der Schreib-Lesespeicher Flag-RAM der Vergleichseinrichtung 11 angesprochen. Ein erster Teil der Adresse identifiziert nun über den Demultiplexer 7.2 ein einem bestimmten Zeilenleiter zugeordnetes Oktal-Flip-Flop 6, indem über den betreffenden Freigabeanschluss $\overline{OE}$ dessen Ausgänge aktiviert werden. Ein zweiter Teil der Adresse identifiziert über die Adresseneingänge des Multiplexers 7 eine einem bestimmten Spaltenleiter zugeordnete einzelne Speicherzelle des Oktal-Flip-Flops 6. In der Folge wird der am Ausgang Z des Multiplexers 7 auftretende, dem Schaltzustand eines bestimmten Steuerbefehlsgebers 3 entsprechende Ausgangszustand der identifizierten Speicherzelle 6 über den Dateneingabeleiter CRUIN an den einen Eingang des Exklusiv-ODER-Gliedes 12 der Vergleichseinrichtung 11 übertragen. Gleichzeitig gibt der Schreib-Lesespeicher Flag-RAM den Inhalt des mittels des ersten und zweiten Teiles der Adresse angesprochenen Speicherplatzes über seinen Ausgang $D_{out}$ an den anderen Eingang des Exklusiv-ODER-Gliedes 12.

Es sei nun angenommen, dass das gespeicherte 1bit-Wort entsprechend einem Schaltzustand «AUS», den Wert «0» aufweist, hingegen das abgetastete Peripheriebit, entsprechend einem Schaltzustand «EIN» des betreffenden Steuerbefehlsgebers 3, den Wert «1» hat. Hierbei wird der Ausgang des Exklusiv-ODER-Gliedes 12 hoch und der Ausgang Q des ersten $\overline{JK}$-Flip-Flops 14 beim Taktsignalwechsel niedrig gesetzt. Dieser Signalwechsel wird am Eingang $\overline{CINT}$ des parallelen Interfacebausteines IF als Unterbrechungsanforderung interpretiert. Bei Vorhandensein der Unterbrechungsanforderung kann kein weiteres DMA-Anforderungssignal erzeugt werden, da der mit dem Ausgang Q des ersten JK-Flip-Flops 14 verbundene Eingang des zweiten NAND-Gliedes 15 ebenfalls niedriges Potential aufweist.

Nachdem der Mikroprozessor CPU die Unterbrechungsanforderung akzeptiert hat, liest er die Adresse des DMA-Adressenregisters, bei welcher die Ungleichheit detektiert wurde. Ebenso liest er das abgetastete Peripheriebit auf dem Dateneingabeleiter CRUIN und schreibt es unter dieser Adresse über den Datenleiter DO in den Schreib-Lesespeicher Flag-RAM der Vergleichseinrichtung 11 ein. Nach Beendigung des Unterbrechungsprogramms setzt der Mikroprozessor den Ausgang CIEN des parallelen Interfacebausteines IF auf niederes Potential, womit das Freigabesignal verschwindet und über den Set-Anschluss S des ersten $\overline{JK}$-Flip-Flops 14 dessen Ausgang Q hochgesetzt und damit die Unterbrechungsanforderung gelöscht wird.

Hat das Mikrocomputersystem 8 zu diesem Zeitpunkt keine anderen Aufgaben zu erledigen, so kann es das Freigabesignal erneut ausgeben, so dass die gleichen Vorgänge wie vorstehend beschrieben ablaufen. Wird während des Vergleichsvorganges keine Ungleichheit festgestellt, so wird auch keine Unterbrechungsanforderung erzeugt. In diesem Fall werden bei Aufrechterhaltung des Freigabesignals laufend DMA-Anforderungen gebildet, was dadurch geschieht, dass jeweils nach Quittierung der DMA-Anforderung über den Ausgang $\overline{ACCGR1}$ des DMA-Bausteines der Ausgang Q des zweiten JK-Flip-Flops 17 beim Taktsignalwechsel erneut auf niederes Potential gesetzt wird. Bei Erreichen der Endadresse des DMA-Adressenregisters wird eine DMA-Unterbrechungsanforderung erzeugt, wodurch der Mikroprozessor CPU veranlasst wird, die Register des DMA-Bausteines neu zu laden.

**Patentansprüche**

1. Schaltungsanordnung zur Eingabe von Steuerbefehlen in ein Mikrocomputersystem, wobei ein Mikroprozessor (CPU) über einen Adressen-, Daten- und Steuerbus (AB, DB, StB) mit mindestens einem Schreib-Lesespeicher (RAM) und einem Festwertspeicher (ROM) sowie über den Adressenbus (AB), einen Ein-Ausgabebus (CRU) und weiteren Leitungen (9) mit einem parallelen Ein-Ausgabe-Interfacebaustein (IF) verbunden ist, und wobei

— mindestens ein Unterbrechungsanforderungs-Eingang ($\overline{CINT}$) des Interfacebausteines (IF) über eine Vergleichseinrichtung (11) an mindestens einer Peripherieeinheit (1 bis 7) angeschlossen ist,

— die Vergleichseinrichtung (11) mit einem ein Freigabesignal für die Steuerbefehlseingabe ausgebenden Ausgang (CIEN) des Interfacebausteines (IF) verbunden ist,

— die Vergleichseinrichtung (11) mindestens ein Exklusiv-ODER-Glied (12) aufweist, und

— bei Auftreten des Freigabesignals und einer Änderung des Schaltzustandes von in der Peripherieeinheit (1 bis 7) zusammengefassten Steuerbefehlsgebern (3) die Vergleichseinrichtung (11) eine Unterbrechungsanforderung erzeugt und der neue Schaltzustand in den Schreib-Lesespeicher (RAM) eingeschrieben wird, dadurch gekennzeichnet,

— dass der eine Eingang des Exklusiv-ODER-Gliedes (12) mit einem Dateneingabeleiter (CRUIN) des Ein-Ausgabebusses (CRU) und der andere Eingang mit dem Datenausgang ($D_{out}$) eines weiteren Schreib-Lesespeichers (Flag-RAM) verbunden ist,

— dass der weitere Schreib-Lesespeicher (Flag-RAM) mit dem Adressenbus (AB) in Verbindung steht und über einen Dateneingang ($D_{in}$) an einem Datenleiter (DO) des Datenbusses (DB) und über einen Schreibanschluss (W) an einem Leiter (MW) des Steuerbusses (StB) angeschlossen ist,

— dass der Ausgang des Exklusiv-ODER-Gliedes (12) über ein erstes NAND-Glied (13) mit den Eingängen (J, $\overline{K}$) eines ersten $\overline{JK}$-Flip-Flops (14) in Verbindung steht, dessen Ausgang (Q) am Unterbrechungsanforderungs-Eingang ($\overline{CINT}$) des parallelen Interfacebausteines (IF) und einem Eingang eines zweiten NAND-Gliedes (15) angeschlossen ist, wobei der Set-Anschluss (S) des ersten $\overline{JK}$-Flip-Flops (14) mit einem weiteren Eingang des zweiten NAND-Gliedes (15) und dem das Freigabesignal ausgebenden Ausgang (CIEN) des parallelen Interfacebausteines (IF) verbunden ist, und

— dass ein zweites JK-Flip-Flop (17) vorgesehen ist, dessen Eingänge (J, $\overline{K}$) mit dem Ausgang des zweiten NAND-Gliedes (15) verbunden sind und dessen Ausgang (Q) an einem ein DMA-Anforderungssignal lesenden Eingang ($\overline{ACCRQ1}$) und dessen Set-Anschluss (S) an einem ein Quittierungssignal ausgebenden Ausgang ($\overline{ACCGR1}$) eines der Steuerung des Vergleichsvorganges dienenden DMA-Bausteines (DMA) angeschlossen ist,

— wobei der DMA-Baustein (DMA) wie an sich bekannt den Steuerbefehlsgebern (3) zugeordnete Adressen erzeugt, mittels welchen er bei Auftreten des Freigabesignals und des dadurch bei Nichtvorliegen einer Unterbrechungsanforderung erzeugten DMA-Anforderungssignals über den Adressenbus (AB) den Schaltzustand der Steuerbefehlsgeber (3) und die im Schreib-Lesespeicher (Flag-RAM) gespeicherten alten Schaltzustände abtastet und an die Vergleichseinrichtung (11) überträgt, wobei bei Auffinden einer Ungleichheit die DMA-Operation unterbrochen wird.

2. Schaltungsanordnung nach Patentanspruch 1, dadurch gekennzeichnet,

— dass die Peripherieeinheit (1 bis 7) aus einem matrixförmigen Tastenfeld (1) besteht, an dessen Kreuzungspunkten die Steuerbefehlsgeber (3) angeordnet sind, wobei wie an sich bekannt die Zeilenleiter des Tastenfeldes (1) mit einer mindestens einen Demultiplexer aufweisenden Zeilenansteuerung (4) in Verbindung stehen,

— dass für jeden Kreuzungspunkt des matrixförmigen Tastenfeldes (1) wie an sich bekannt eine Speicherzelle vorgesehen ist, wobei jedem Zeilenleiter eine der Anzahl Spaltenleiter entsprechende, zu Mehrfachspeichern (6) zusammengefasste Anzahl Speicherzellen zugeordnet ist, deren Eingänge über einen Spaltenempfänger (5) mit den Spaltenleitern in Verbindung stehen,

— dass eine aus einem Zähler und einem Taktgenerator bestehende Adressiereinrichtung (4.1) vorgesehen ist, welche über Adressenleiter (4.2) mit dem Demultiplexer der Zeilenansteuerung (4) und einem adressierbaren Latch (4.3) verbunden ist, dessen Ausgänge an den Taktanschlüssen (CP) der Mehrfachspeicher (6) angeschlossen sind, und

— dass ein Multiplexer (7), ein Demultiplexer (7.2) und ein Bustreiber (7.1) vorgesehen sind, wobei der Bustreiber (7.1) eingangsseitig am Adressenbus (AB) des Mikrocomputersystems (8) angeschlossen ist und ausgangsseitig über einen ersten Teil der Adressenleiter mit den Adresseneingängen des Demultiplexers (7.2) und über einen zweiten Teil der Adressenleiter mit den Adresseneingängen des Multiplexers (7) verbunden ist, und wobei die Ausgänge des Demultiplexers (7.2) mit den Freigabeanschlüssen (OE) der Ausgänge der Mehrfachspeicher (6) in Verbindung stehen und der Ausgang (Z) des Multiplexers (7) über den Bustreiber (7.1) am Dateneingabeleiter (CRUIN) des Ein-Ausgabebusses (CRU) angeschlossen ist.

**Claims**

1. Circuit arrangement for entering control commands into a microcomputer system, wherein a microprocessor (CPU) is connected by means of an address bus (AB), a data bus (DB) and a controll bus (StB) to at least one random-access memory (RAM) and one read-only memory (ROM) and wherein said microprocessor (CPU) is further connected by means of said address bus (AB), an input-output bus (CRU) and other connections (9) to a parallel input/output interface module (IF), and wherein

— at least one interrupt request input (CINT) of the interface module (IF) is connected through a comparator (11) to at least one peripheral module (1 to 7),

— the comparator (11) is connected to an output (CIEN) of the interface module (IF), which issues an enable signal for the control command input

— the comparator (11) comprises at least one exclusive-OR gate (12), and

— at the event of the enable signal and a change of the switching state of the control command transmitters (3) located in the peripheral module (1 to 7), the comparator (11) generates an interrupt request and the new switching state is written into the random-access memory (RAM), characterised by the fact

— that one input of the exclusive-OR gate (12) is connected to a data-input line (CRUIN) of the input-output bus (CRU) and the other input is connected to the data output ($D_{out}$) of an additional random-access memory (Flag-RAM),

— that the additional random-access memory (Flag-RAM) is connected to the address bus (AB) and is also connected through a data input ($D_{in}$) to a data line (DO) of the data bus (DB) as well as through a write terminal (W) to a line (MW) of the control bus (StB),

— that the output of the exclusive-OR gate (12) is connected through a first NAND gate (13) to the inputs (J, K) of a first JK-Flip-Flop (14), whose output (Q) is connected to the interrupt request input (CINT) of the parallel interface module (IF) as well as to an input of a second NAND gate (15), wherein the set terminal (S) of the first JK-Flip-Flop (14) is connected to another input of the second NAND gate (15) as well as to the output (CIEN) of the parallel interface module (IF) issuing the enable signal, and

— where a second JK-Flip-Flop (17) is provided, whose inputs (J, K) are connected to the output of the second NAND gate (15) and whose output (Q) is connected to an input reading a DMA-request signal (ACCRQ1) from the DMA-module (DMA) controlling the comparison procedure and whose set terminal (S) is connected to an output issuing an acknowledgment signal (ACCGR1) of said DMA module (DMA),

— wherein the DMA module (DMA) generates, as is known, adresses allocated to the control command transmitters (3) by means of which said DMA module (DMA), at the occurrence of the enable signal and the DMA request signal produced thereby in case of absence of an interrupt request, scans through the address bus (AB) the switching state of the control command transmitters (3) as well as the previous switching states stored in the random-access memory (Flag-RAM) and transmits them to the comparator (11) and wherein the DMA-operation is interrupted in case of an unequality.

2. Circuit arrangement according to claim 1, characterised by the fact,

— that the peripheral module (1 to 7) consists of a keyboard (1) having the form of a matrix, wherein the control command transmitters (3) are arranged at the points of intersection of said matrix and where, as is known, the line bars of said keyboard (1) are connected to a line driver (4) containing at least one demultiplexer,

— that, as is known, a memory cell is provided for each intersection point of the matrix keyboard (1), wherein a number of memory cells combined to multi-storage modules (6) and corresponding to the number of column bars is allocated to each line bar and the inputs of said memory cells are connected through a column receiver (5) to the column bars,

— that an addressing device (4.1) comprising a counter and a clock pulse generator is provided, which is connected through an address bus (4.2) to the demultiplexer of the line driver (4) and to an addressable latch (4.3), the output terminals thereof being connected to the clock pulse terminals (CP) of the multi-storage modules (6), and

— that a multiplexer (7), a demultiplexer (7.2) and a bus driver (7.1) are provided, the input of the bus driver (7.1) being connected to the address bus (AB) of the microcomputer system (8), whilst the output of said bus driver (7.1) is connected to the address inputs of the demultiplexer (7.2) through a first part of the address bus and, through a second part of said address bus, to the address inputs of the multiplexer (7) and where the outputs of the demultiplexer (7.2) are interconnected to the enable terminals ($\overline{OE}$) of the outputs of the multi-storage modules (6) and where the output (Z) of the multiplexer (7) is connected through the bus driver (7.1) to the data input line (CRUIN) of the input-output bus (CRU).

## Revendications

1. Circuit pour l'entrée de signaux de commande d'exécution dans un système de micro-ordinateur, dans lequel un micro-processeur (CPU) est relié, par l'intermédiaire de bus d'adresses, de données et de commande (AB, DB, StB), à au moins une mémoire vive (RAM) et une mémoire morte (ROM), ainsi qu'à un composant d'interface d'entrées/sorties parallèle (IF), par l'intermédiaire du bus d'adresses (AB), d'un bus d'entrées/sorties (CRU) et d'autres lignes (9), et dans lequel:

— au moins une entrée de demande d'interruption ($\overline{CINT}$) du composant d'interface (IF) est connectée à au moins une unité périphérique (1 à 7), par l'intermédiaire d'un dispositif comparateur (11);

— le dispositif comparateur (11) est relié à une sortie (CIEN) du composant d'interface (IF) délivrant un signal de validation pour l'introduction des instructions de commande;

— le dispositif comparateur (11) comporte au moins un élément OU-exclusif (12); et

— à l'apparition du signal de validation et d'une modification de l'état de commutation de générateurs d'instructions de commande (3) regroupés dans l'unité périphérique (1 à 7), le dispositif comparateur (11) engendre une demande d'interruption et le nouvel état de commutation est inscrit dans la mémoire vive (RAM); caractérisé en ce que,

— la première entrée de l'élément OU-exclusif (12) est reliée à une ligne d'introduction de données (CRUIN) du bus d'entrée/sorties (CRU) et l'autre entrée est reliée à la sortie de données ($D_{out}$) d'une seconde mémoire vive (Flag-RAM);

— la seconde mémoire vive (Flag-RAM) est en liaison avec le bus d'adresse (AB) et est connectée à une ligne de données (DO) du bus de données (DB) par l'intermédiaire d'une entrée de données ($D_{in}$) et à une ligne (MW) du bus de commande (StB), par l'intermédiaire d'une borne d'écriture (W);

— la sortie de l'élément OU-exclusif (12) est en liaison, par l'intermédiaire d'un premier élément NON-ET (13), avec les entrées (J, $\overline{K}$) d'un premier flip-flop J$\overline{K}$ (14), dont la sortie (Q) est connectée à l'entrée de demande d'interruption ($\overline{CINT}$) du composant d'interface parallèle (IF) et à une entrée d'un second élément NON-ET (15), la borne de remise à 1 (S) du premier flip-flop J$\overline{K}$ (14) étant reliée à une seconde entrée du second élément NON-ET (15) et à la sortie (CIEN) du composant d'interface parallèle (IF) délivrant le signal de validation; et

— un second flip-flop J$\overline{K}$ (17) est prévu, dont les entrées (J, $\overline{K}$) sont reliées avec la sortie du second élément NON-ET (15) et dont la sortie (Q) est connectée à une entrée ($\overline{ACCRQ1}$) lisant un signal de demande d'accès direct à la mémoire et la borne de remise à 1 (S) à une sortie ($\overline{ACCGR1}$), délivrant un signal d'accusé, d'un composant d'accès direct à la mémoire (DMA) servant à la commande de l'opération de comparaison;

— le composant d'accès direct à la mémoire (DMA) engendrant, d'une manière connue en soi, les adresses associées aux générateurs d'instructions de commande (3) et grâce auxquelles, à l'apparition du signal de validation et du signal de demande d'accès direct à la mémoire engendré par le précédent en l'absence d'une demande d'interruption, il scrute, par l'intermédiaire du bus d'adresses (AB), l'état de commutation des générateurs d'instructions de commande (3) ainsi que les anciens états de commutation mémorisés dans la mémoire vive (Flag-RAM) et les transmet au dispositif comparateur (11), l'opération d'accès direct à la mémoire étant alors interrompue en cas de non-égalité.

2. Circuit selon la revendication 1, caractérisé en ce que:

— l'unité périphérique (1 à 7) est constituée d'un clavier en forme de matrice (1), aux points d'intersection duquel sont disposés, les générateurs d'instructions de commande (3), les conducteurs de rangée du clavier (1) étant, d'une manière connue en soi, en liaison avec une commande de rangées (4) comportant au moins un démultiplexeur;

— un bloc mémoire est prévu pour chaque point d'intersection du clavier en forme de matrice (1), d'une manière connue en soi, chaque conducteur de rangée étant associé à un nombre de blocs-mémoire regroupés en mémoires multiples (6) et correspondant au nombre de conducteurs de colonne, les entrées de ces blocs-mémoire étant en liaison avec les conducteurs de colonne, par l'intermédiaire d'un récepteur de colonnes (5);

— il est prévu un dispositif d'adressage (4.1), constitué d'un compteur et d'un générateur de signaux d'horloge, et relié, par l'intermédiaire d'une ligne d'adresses (4.2), à un démultiplexeur de la commande de rangées (4) et à un circuit à verrouillage adressable (4.3), dont les sorties sont connectées aux bornes de signaux d'horloge (CP) des mémoires multiples (6); et

— il est prévu un multiplexeur (7), un démultiplexeur (7.2) et un circuit de commande de bus (7.1), ce circuit de commande de bus (7.1) étant connecté, du côté de son entrée, au bus d'adresses (AB) du système de micro-ordinateur (8) et, du côté de sa sortie, aux entrées d'adresse du démultiplexeur (7.2), par l'intermédiaire d'une première partie des lignes d'adresses, et aux entrées d'adresses du multipléxeur (7), par l'intermédiaire d'une seconde partie des lignes d'adresses, les sorties du démultiplexeur (7.2) étant en liaison avec les bornes de validation ($\overline{OE}$) des sorties de mémoires multiples (6) et la sortie (Z) du multiplexeur (7) étant connectée à la ligne d'introduction de données (CRUIN) du bus d'entrées/sorties (CRU), par l'intermédiaire du circuit de commande de bus (7.1).

Fig. 1

0 062 141

# Fig.2